# EUROPEAN PATENT APPLICATION

(11) **EP 4 265 312 A1**
(43) Date of publication of application: **25.10.2023**
(21) Application number: 22398009.5
(22) Date of filing: 19.04.2022
(51) Int. Cl.: B01D 11/04

(54) **INTEGRATED EQUIPMENT FOR LIQUID-LIQUID EXTRACTION AND SOLVENT RECOVERY BY EVAPORATION IN FALLING THIN FILM**

(71) Applicant: BGW, S.A., 3250-121 Alvaiázere (PT)
(72) Inventor: De Almeida Ferreirinha, Pedro Luis, 3660-694 Várzea SPS São Pedro do Sul (PT)
(74) Representative: Ferreira Magno, Fernando Antonio

(57) **Abstract**

The invention relates to an integrated equipment which comprises a liquid-liquid extraction separation unit coupled to a falling thin film evaporator used for solvent recovery. The invention consists of the continuous integration of two modules: the liquid-liquid extraction unit, which has the versatility of being able to operate with one, two or three consecutive steps; and the solvent or solute recovery unit, which may provide both the evaporation of a low-boiling solvent or the evaporation of the solute(s), in the case that high-boiling solvents are used.

## Description

### Field of invention

The present invention relates to an equipment that allows the integration of a liquid-liquid extraction unit, composed by three extraction stages, with a solvent recovery unit by falling film evaporation, which is related to the field of industrial chemistry, in particularly with the recycling organic materials by pyrolysis.

### Previous art

Liquid-liquid extraction consists of a separation process in which the solute(s) of interest is (are) transferred from the feeding stream to the extraction solvent, both in the liquid phase.

The choice of a liquid-liquid extraction process should be considered when one of the following conditions is verified: high energy consumption or the presence of azeotropes in the distillation; presence of thermosensitive solute(s); impossibility of separation by distillation, for example, due to the low volatility of the solute(s) of interest.

The initial medium, composed of solute and diluent, is mixed with the extraction solvent, from which the extract phase (extraction solvent with one or more solutes of interest) and the raffinate phase (diluent) result.

The extraction liquid, often referred as the extraction solvent or mass separating agent, generally includes organic or inorganic compounds or combinations. This solvent must be immiscible or partially miscible with the diluent, whose function is to solubilize the solute(s) present in the feed stream, with the purpose of transferring it from the initial medium to the solvent of extraction.

The liquid-liquid extraction procedure can be generally understood by the following steps:
- Mix the initial medium with the extraction solvent;
- Separate the diluent from the extraction solvent, or separation of phases between the extract and the raffinate;
- Solvent recovery to isolate the solute(s) of interest and to re-use the extraction solvent.

However, despite being a simple procedure, either on a laboratory or industrial scale, there are no known of industrial-scale equipment that would allow, in a continuous way, the integration of these steps and the energetic optimization of overall process.

Analyzing the available solutions on the market for each of the three steps described above, it can be observed:
- there are equipments that allow mixing the feed stream with the extraction solvent, in batches or continuously, using, for example, a helical mixer or column technology (Karr, Scheibel, Rotating Disc Contactor - RDC, Pulse Column and Packed Column);
- the available technologies to carry out the separation of the solute from the extraction solvent are essentially based on centrifugal separators, either with horizontal or vertical axes;
- there are, also equipments that combine two of the steps: mixing and separation;
- some of them carry out the mixing and separation using several tanks in which the extraction solvent is used in several successive extractions, without recovering the solvent before being used again; others proceed to a separation technique based on centrifugation, the so-called single-stage centrifugal extractors;
- solvent recovery is normally carried out by distillation, without any specific equipment or technology for solvent recovery coupled to an extraction unit.

### Object of the invention

This invention allows the integration of liquid-liquid extraction unit with a solvent recovery unit, where the liquid-liquid extraction unit enable the separation of the solutes, in a continuous flow, from a wide range of diluents and using a large variety of extraction solvents, which diminishes the errors and, at the same time, improves the security of the entire equipment, reduces the operation time when compared with the batch separation equipment. The solvent recovery unit allow the extraction of the solutes from the extraction solvent and its re-use by feeding it back to the extraction unit. In this way, and being a continuous flow and automated process, allows not only to reduce the amount of extraction solvent used but also increases the security and the overall efficiency.

Therefore the object of this invention is an equipment composed of a liquid-liquid extraction unit, with one or more extraction steps in series, and a solvent recovery unit by falling film evaporation. In a simplified way, the following steps take place in the equipment:
- in the liquid-liquid extraction unit, in a first phase, the diluent and solute(s) (or initial medium) are mixed with the extraction solvent, followed by a decantation step to separate the extract and the raffinate phases. The extraction unit has the versatility of being able to carry out one, two or three extraction steps. Each unit is composed by a mixer and a static stirrer fed with the extraction solvent and with the initial medium using hydraulic pumps; the lines comprise a flow regulation mechanism, allowing to control the initial medium/extraction solvent ratio that satisfies the transfer of the solute from the initial medium to the extraction solvent; a decanter, and respective collection tanks;
- in the solvent recovery unit, the solutes extracted are isolated from the extraction solvent which allows its re-use;
- the steps described (mixing, separation, and solvent recovery) occur in an automated and continuous flow; the solvent recovery step takes place in a falling film evaporator.
- the mixers being equipped with solvent flow meters coupled to proportional control valves allows the control of the of the ratio initial medium/extraction solvent;
- a flow meter being placed at the end of the first heat exchanger allows to control the flow of the mixture of the extraction solvent with the solutes entering the heat exchanger by adjusting the rotation speed of the pump;
- the falling film evaporator (E) being equipped with a pressure sensor (PE) that, by adjusting the velocity of the vacuum pump controls the pressure inside the evaporator and being equipped with temperature sensors, that measures the temperature of the thermal fluid at the inlet and outlet, and the temperature inside the falling film evaporator being controlled by varying the rotation speed of the vacuum pump, considering the difference in temperatures recorded by (T₁ and T₂).

The fact that, in the set-up according to the invention, the three steps of liquid-liquid extraction occur in automated and continuous flow, allows the reduction of the error probability, increasing the safety of the installation, the reduction of adjustment filling and emptying times when compared to batch separation systems. The possibility of adjusting the operating conditions, such as flow rates and temperatures, gives the system the versatility to use different solutes, dilutants, and extraction solvents.

The above-described evaporation process by falling film evaporation can be applied to recover solvents with both low or high boiling point, capable of being used under vacuum or at atmospheric pressure. The heating fluid, which circulates in the evaporator shell, also has the versatility to circulate in countercurrent or in cocurrent.

The equipment uses shell and tube type heat exchangers that allow energy integration of the system. In steady state, the evaporated stream transfers its energy, through its circulation in the exchanger shell, to the extract phase that circulates in the exchanger tubes, when it is fed to the evaporator. This energy integration inevitably makes possible to reduce the energy needs of the system.

### Summary of the invention

The present invention provides an integral, simple, effective, and efficient equipment for liquid-liquid extraction separation processes with an integrated unit for solvent recovery by falling film evaporation.

This equipment allows a better energetic optimization making the liquid-liquid extraction process more sustainable and its integration with a solvent recovery unit in a single equipment allows the automation of the equipment, which guarantees the reproducibility and repeatability of the results.

It is a versatile equipment due to the possibility of adjusting all the parameters of the different steps, allowing the use of a wide range of extraction solvents, with either low or high boiling point, and of diluents/solutes if they are in the liquid state.

This equipment makes successive mixing/decantation steps possible, which can occur in one, two or in three stages, with the possibility of separately collect the extract and raffinate fractions, in each stage.

The equipment, according to the invention, performs the solvent recovery process through a versatile, efficient, and energy-optimized process, using a falling film evaporator.

The solvent recovery step, according to the invention, allows to operate with a higher exergetic yield. The energy supplied to the equipment, with the solvent recovery being pressurized, allows the creation of microdroplets in the sprinkler nozzles that exponentiate the mass and heat transfer area for the evaporation of the compound(s) of interest.

### Brief description of the drawings

The features of the present invention will become evident from the description of the presently preferred embodiment, given as a non-limiting example of the invention with reference to the accompanying drawings, in which:
- Fig. 1 is a schematic block diagram of the overall operation of the equipment described in the present invention;
- Fig. 2 is schematic diagram of the process referring to the invention;
- Fig. 3 is a schematic drawing of the falling film evaporator;
- Fig. 4 is a schematic drawing of the shell and tube heat exchanger, which promotes the preheating of the extraction solvent;
- Fig. 5 is a schematic drawing of the static stirrer.

### Detailed description of the invention

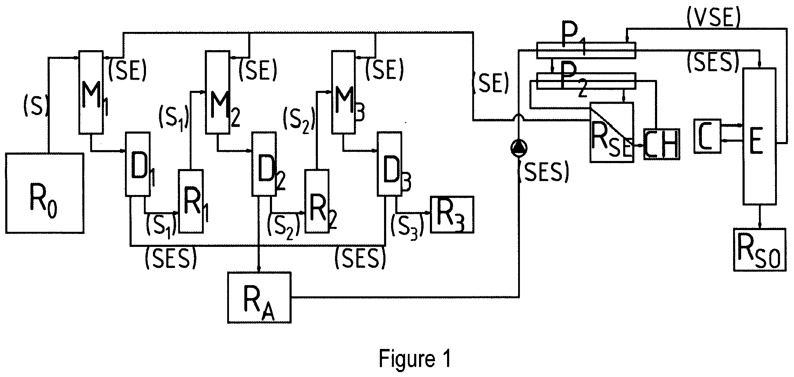

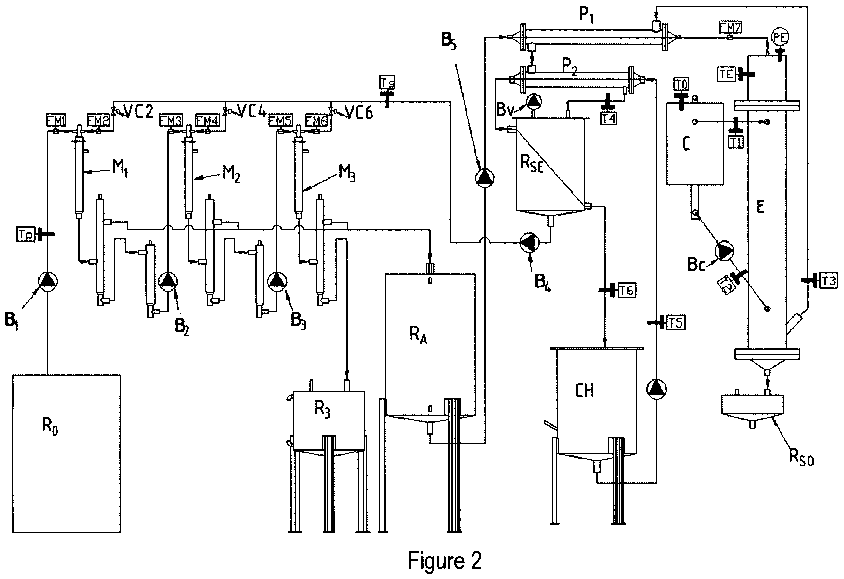

The equipment of liquid-liquid extraction and solvent recovery by falling film evaporation of the present invention will be described hereinafter combined with the schematic diagram shown in Fig. 1, that illustrates the liquid-liquid extraction process and solvent recovery shown in Fig. 2, where are displayed three mixers, three decanters, one evaporator, and two cascade heat exchangers. However, this equipment can include a different number of mixers, decanters, boilers, and condensers according to the fractionation needs of the different elements of the initial medium, being the presented configuration the preferred embodiment and given as an easy understanding example.

The equipment according to the invention comprises:
- a tank R₀ containing the initial medium, a collection tank R₁ for the raffinate phase resulting from the first extraction stage, a collection tank R₂ for the raffinate phase after two extraction steps, a third stage raffinate collection tank R₃ after the third extraction, an extraction solvent tank R_{SE}, an extract collection tank R_{A} and a solute collection tank Rso;
- three mixers M₁, M₂, M₃, each comprising a static stirrer A₄, an inlet A₁ of the initial medium, an extraction solvent inlet A₂, a vent pipe A₃, a mixing chamber A₅, an output A₆ for the mixture extraction solvent with initial medium;
- hydraulic pump B₁ with flow regulation mechanisms between 0.3-3 L/h, placed between the tanks R₀ and R_{SE} and the first mixer M₁;
- hydraulic pump B₂ with flow regulation mechanisms between 0.3-3 L/h, place between the tanks R₁ and R_{SE} and the second mixer M₂;
- hydraulic pump B₃ with flow regulation mechanisms between 0.3-3 L/h, placed between the thanks R₂ and R_{SE} and the third mixer M₃;
- three decanters D₁, D₂, D₃;
- an evaporator E comprising one or more sprinklers E₀, an expansion chamber E₁, a tubular bundle E₂, a helical static mixer E₃, an inlet pipe E₇ for thermal fluid, baffle E₈, an outlet pipe E₉ for thermal fluid, a steam chamber E₄, an evaporate outlet pipe E₅, a solute outlet pipe E₆;
- a first shell and tube heat exchanger P₁, which comprises a tubular bundle P_{A}, a helical static mixer P_{B}, a baffle Pc, an inlet P_{D} for the gaseous stream after evaporation, and an outlet P_{E} for the respective biphasic mixture;
- a second shell and tube heat exchanger P₂, comprising an exchanger tubular bundle P_{A}, an exchanger static mixer P_{B}, a baffle Pc, a two-phase mixing inlet P_{F} and a total condensate outlet P_{G};
- a refrigeration system CH;
- a boiler C.

Referring to the figures and according to the present invention, the feeding solution used in the equipment can have any chemical composition (mixture of compounds) if it is in the liquid phase.

The operation of the liquid-liquid extraction and solvent recovery equipment, and using as an example the pyroligneous liquid with chemical composition summarized in Table 1, can be described as follow:
- the pyroligneous liquid present in the tank R₀ and the extraction solvent present in the tank R_{SE}, which in this specific case is ethyl acetate (low boiling point solvent), are fed to the mixer equipped with a static stirrer M₁. Pyroligneous liquid and the extraction solvent are fed using hydraulic pumps, with flow regulation mechanisms between 0.3-3 L/h e 1-12 L/h, respectively, to ensure the ratio between the pyroligneous liquid and extraction solvent that best satisfies the mass transfer of the solute(s) from the pyroligneous liquid to the extraction solvent. For this particular example, it is considered that the overall mass ratio pyroligneous liquid/ethyl acetate should be between 1:3 to 1:1 for each of the three extraction stages;
- the mixture, after being fed into the mixer M₁, goes to the decanter D₁;
- in D₁, the phase separation between the raffinate and the extract loaded with organic compounds occurs, and the extract phase is sent to the collection tank R_{A}. At this point, the initial medium (pyroligneous liquid) lost a large part of its organic compounds, and being designated as the first raffinate after one extraction step, which after decantation goes to the tank R₁;
- in the second extraction step, the first raffinate present in the tank R₁ and fresh extraction solvent present in the tank R_{SE} are fed to the mixer M₂ equipped with a static stirrer. Both are fed using hydraulic pumps with flow regulation mechanisms in order to ensure the ratio between the first raffinate and the extraction solvent that best satisfies the mass transfer;
- after being fed into the mixer M₂, the mixture goes to the decanter D₂, where the raffinate and the extract phases are separated by simple decanting, and the extract phase is sent to the collection tank R_{A}. The pyroligneous liquid after two liquid-liquid extraction steps is called the second raffinate;
- the second raffinate present in the tank R₂ and the fresh extraction solvent present in the tank R_{SE} are fed to the mixer M₃ equipped with a static mixer. Both are supplied by hydraulic pumps with flow regulation mechanisms to ensure the ratio between the raffinate and the extraction solvent that best satisfies the mass transfer;
- after passing through the mixer M₃, the mixture goes to the decanter D₃, where the raffinate and the extract phases are separated by simple decantation, and the extractant is sent to the collection tank R_{A}. After three extraction stages, the pyroligneous liquid is designated as the third raffinate or aqueous fraction which goes to the tank R₃;
- the solvent flow is controlled through the actuation of the proportional control valve VC₂, VC4 and VC₆ as a function of the flow measured by FM₂, FM4 and FM₆, respectively;
- simultaneously, the extraction solvent present in the extract phase is recovered and, consequently, the organic compounds (solute(s)) are separated through a falling film evaporation process. The extract phase present in the collection tank R_{A} is then fed to the evaporator through a high-pressure pump B₅, with a flow rate between 1-12 l/h. It will preheat as it passes through the heat exchanger P₁ located upstream of the upper injection chamber of the evaporator;
- the extract flow is controlled by varying the rotation speed of the pump B₅, according to the readings of the flow meter FM₇;
- the extraction solvent containing the with organic compounds extracted, is injected into the expansion chamber E₁ of the boiler, through one or more sprinklers E₀, which provide the vaporization of the mixture, creating an atmosphere of microdroplets that follow through the tubes E₂. This tubular bundle is composed of helical static mixers E₃ that increase the turbulence of the fluid, ensuring that the microdroplets touch its walls as a film, and providing an almost instantaneous evaporation. In contrast, the solute, which has a higher boiling temperature, remains in the liquid phase and flows through the static mixer to the vapor chamber E₄, being drained by gravity through the pipe E₆ into the solute tank Rso;
- the evaporator pressure is controlled by varying the speed of the vacuum pump Bv as a function of the pressure measured by the pressure transmitter PE;
- the evaporator temperature is controlled using temperature sensors TE and T₃. The temperature of the thermal fluid in the boiler and the temperature of the thermal fluid at the inlet and outlet of the evaporator are controlled by the sensors To, T₁ and T₂, respectively. The temperature difference between T₁ and T₂ allows setting the rotation speed of the vacuum pump Be, and thus controlling the temperature inside the falling film evaporator;
- the evaporated fraction is sent to the heat exchanger P₁, where partially condenses while it works as a hot fluid to preheat the extract phase being fed to the evaporator;
- this two-phase mixture (liquid and gas) enters the second heat exchanger P₂, where completely condenses and cool down to the desired temperature, sent to the extraction solvent tank R_{SE}, and fed again into the static mixers present in the liquid-liquid extraction unit;
- the tanks R_{SE} and R₀ are thermally insulated and contain inside a coil that is crossed by a mixture of water and ethylene glycol (if necessary), which returns from the tubular bundle of the heat exchanger P₂ and goes to the refrigeration system CH to be cooled down;
- the two heat exchangers P₁ and P₂ are shell and tube heat exchangers (with 0.1 m² of heat transfer area, a global heat transfer coefficient of 350 W/m²K and they are composed of tubes with diameter of 6 mm) filled with liquid inside the tubular bundle, with baffle arranged on the outside between the tubes and the shell, through which the gaseous phase condensate.

The present equipment is thermally insulated, to minimize heat losses with the outside environment. This insulation allows to operate at the desired temperatures in each step of the process, being able, for example, to operate the liquid-liquid extraction unit at temperatures below room temperature.

The solvent recovery unit, according to the invention, operates at a higher exergetic yield when compared to conventional distillation or evaporation units. The energy supplied to the equipment, with the solvent recovery pressurization, allows the generation of microdroplets in the sprinkler nozzles that exponentiate the mass and heat transfer area for the evaporation process.

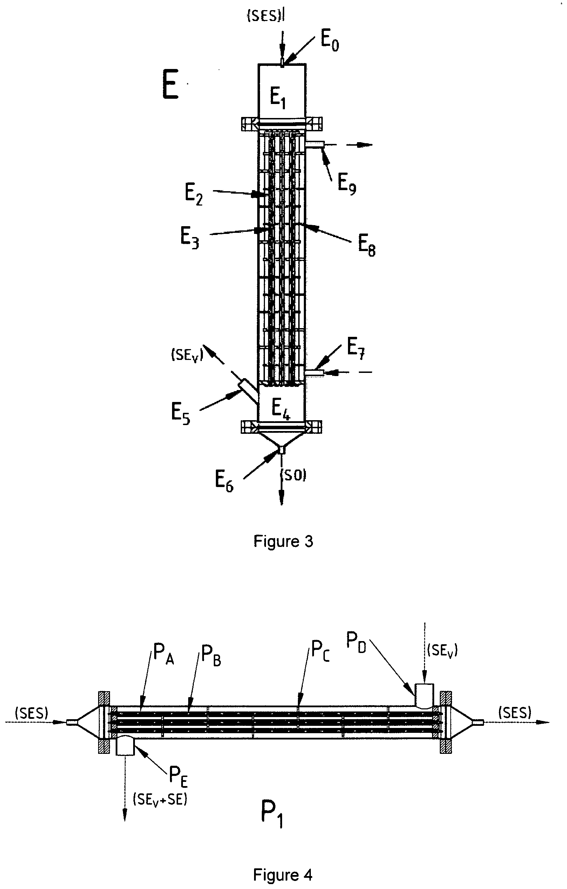

Referring to Fig. 3, the falling film evaporator E comprises an expansion chamber E₁ with one or more sprinklers E₀ to vaporize the extraction solvent, a vertical body consisting of a shell and tubular bundle E₂ with helical static mixers E₃, a vapor chamber E₄, an evaporate outlet pipe E₅ for the extraction solvent, an outlet pipe E₆ for the solute (organic compounds), an inlet pipe E₇ for hot thermal fluid from boiler C, which runs along the outside of the tubular bundle with successive changes of direction caused by baffles E₈ to E₉ to return to the boiler.

This equipment can comprise several cascade boiling steps, promoting a more versatile and selective boiling, avoiding the entrainment of compounds with similar boiling to that of the extraction solvent.

Referring to Fig. 4, the heat exchanger P₁ promotes the preheating of the extraction solvent with organic compounds (extract phase). This mixture heats up as it travels inside the tubular bundle P_{A}, in turbulent flow caused by the static mixers P_{B}, which favour the heat transfer with the extraction solvent vapor that partially condenses on the outside of the tubular bundle P_{A}, enters through the tube P_{D}, and follows the baffle Pc to the outlet pipe P_{E}.

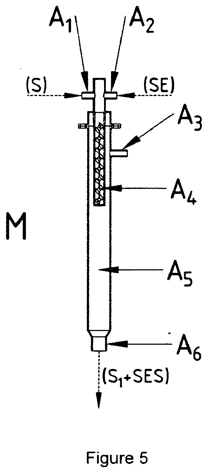

Referring to Fig. 5, the initial medium, pyroligneous liquid, is fed into pipe A₁ and the extraction solvent is fed into pipe A₂. The desired flow rates of each fraction can be regulated upstream by varying the frequency of the hydraulic pumps. Afterwards, the two fluids pass through the static mixer that promotes the mixing of both liquids and it is then discharged into the reception chamber A₅, which directs this mixture to the outlet through the pipe A₆.

For the initial medium considered, pyroligneous liquid, and after three extraction steps, it was obtained as extraction efficiency of 80 ± 5 % for the organic compounds summarized in this Table 1.

**Table 1 - Average chemical characterization of the pyroligneous liquid.**

| **Compounds** | % **w/w** |
|---|---|
| Acetic acid | 5.5 ± 2.0 |
| Methanol | 2.0 ± 0.5 |
| Furfural | 1.5 ± 0.3 |
| Hidroxyacetone | 0.5 ± 0.1 |
| Methyl acetate | 0.4 ± 0.3 |
| Ethanol | 0.4 ± 0.2 |
| Propanoic acid | 0.4 ± 0.2 |
| 5-methylfurfural | 0.2 ± 0.1 |
| Butanoic acid | < 0.1 |
| Acetone | < 0.1 |
| Valeric acid | < 0.1 |
| Acetaldehyde | < 0.1 |
| Guaiacol | < 0.05 |
| 3-methyl-1,2-ciclopentanedione | < 0.05 |
| 5-hidroxymethylfurfural | < 0.02 |
| Creosol | < 0.02 |
| Glycoaldehyde | < 0.02 |
| Phenol | < 0.02 |
| Ethyl acetete | < 0.01 |
| o-cresol | < 0.01 |
| p-cresol | < 0.01 |
| 4-methylsyrinqol | < 0.01 |
| Syrinqol | < 0.01 |
| Others | 1.5 ± 0.5 |

### List of alphanumeric references

- A₁: Inlet of the initial medium (pyroligneous liquid) into the mixer;
- A₂: Inlet of extraction solvent into the mixer;
- A₃: Mixer breather pipe;
- A₄: Static mixer;
- A₅: Mixer receiving chamber;
- A₆: Mixture outlet pipe;
- B₁: Hydraulic pump;
- B₂: Hydraulic pump;
- B₃: Hydraulic pump;
- B₄: Hydraulic pump;
- B₅: Hydraulic pump;
- Bc: Hydraulic pump for the heat fluid;
- Bv: Vacum pump (vacum generator);
- C: Boiler;
- CH: Cooling system;
- D₁: Decanter 1;
- D₂: Decanter 2;
- D₃: Decanter 3;
- E: Falling film evaporator;
- E₀: Spray nozzle;
- E₁: Expansion chamber;
- E₂: Tubular bundle;
- E₃: Helical static mixer;
- E₄: Evaporate chamber;
- E₅: Gas phase outlet pipe;
- E₆: Solute outlet pipe;
- E₇: Thermal fluid inlet pipe;
- E₈: Baffles;
- E₉: Thermal fluid outlet pipe;
- FM₁: Product flow meter of mixer 1;
- FM₂: Solvent flow meter of mixer 1;
- FM₃: Product flow meter of mixer 2;
- FM₄: Solvent flow meter of mixer 2;
- FM₅: Product flow meter of mixer 3;
- FM₆: Solvent flow meter of mixer 3;
- FM₇: Flow meter of the mixture solute-solvent for the evaporator;
- M₁: Mixer 1;
- M₂: Mixer 2;
- M₃: Mixer 3;
- P1: Heat exchanger 1;
- P2: Heat exchanger 2;
- P_{A}: Heat exchanger tubular bundle;
- P_{B}: Heat Exchanger static mixer;
- Pc: Heat exchanger fins;
- P_{D}: Input of the gaseous phase resulting from the evaporation process;
- P_{E}: pressure sensor of the falling film evaporator E;
- R₀: Pyroligneous liquid, initial medium or feed tank;
- R₁: Tank for collecting the first raffinate product after one extraction step;
- R₂: Tank for collecting the second raffinate after two extraction steps;
- R₃: Tank for collecting the third raffinate after three extraction steps;
- R_{SE}: Extraction solvent tank;
- R_{SO}: Solute collection tank;
- S: Substrate, initial medium, feed;
- S₁: Raffinate after one liquid-liquid extraction step;
- S₂: Raffinate after two liquid-liquid extraction steps;
- S₃: Raffinate after three liquid-liquid extraction steps;
- SE: Extraction solvent;
- SES: Extract phase;
- SEV: Gas phase after evaporation or extraction solvent vapor. extração;
- VC2: Control valve of the solvent flow in the mixer M₁;
- VC4: Control valve of the solvent flow in the mixer M₂;
- VC6: Control valve of the solvent flow in the mixer M₃;
- TE: Temperature sensor for the inside of the evaporator;
- Tp: Temperature sensor for the initial medium;
- Ts: Temperature sensor for solvent;
- T₀: Temperature sensor for the heat fluid of the boiler;
- T₁: Temperature sensor for the heat fluid at the inlet of the evaporator;
- T₂: Temperature sensor for the heat fluid at the outlet of the evaporator;
- T₃: Temperature sensor for the solvent vapor at the outlet of the evaporator;
- T₄: Temperature sensor for the liquid solvent at the outlet of the heat exchanger P2;
- T₅: Temperature sensor for heat fluid at the inlet of heat exchanger P₂;
- T₆: Temperature sensor for the heat fluid ate the inlet of the cooling system CH

## Claims

1. - An equipment for liquid-liquid extraction and solvent recovery by a falling film evaporator constituted by a liquid-liquid extraction unit coupled to solvent recovery by falling film evaporator unit comprising:
at least one tank (Ro) containing the initial medium;
at least three tanks, (R₁ R₂ and R₃) to collect the raffinate phases;
at least one tank (R_{SE}) that contains the extraction solvent;
at least one tank (R_{A}) to collect the extract;
at least on tank (Rso) to collect the solute;
at least three mixers (M₁, M₂, M₃);
ate least five hydraulic pumps, with flow regulation mechanisms, (B₁, B₂, B₃, B₄ and B₅);
the pump (B₁) being located between the tank (R₀) mixer (M₁), the hydraulic pump (B₂) being located between the tank (R₁) and the mixer (M₂), the hydraulic pump (B₃) being located between the tank (R₂) and the mixer (M₃), the hydraulic pump (B₄) being located between the tank (R_{SE}) and the mixer (M₁), the hydraulic pump (B₅) being located between the tank (R_{A}) and the heat exchanger (P₁);
at least three decanters (D₁, D₂, D₃);
at least two shell and tube type heat exchangers (P₁, P₂);
at least one evaporator (E);
at least one cooling system (CH);
a boiler (C);
the decanter (D₁) being located between the mixer (M₁) and the tank (R₁), the decanter (D₂) being located between the mixer (M₂) and the tank (R₂), the decanter (D₃) being located between the mixer (M₃) and the tank (R₃), the heat exchanger (P₁) being located between the tank (R_{A}) and the falling film evaporator (E), the heat exchanger (P₂) being located between the tank (RSE) and the cooling system (CH); wherein each of the mixers are equipped com flow meters (FM₂, FM₄ and FM₆) which are coupled to proportional control valves that control the ratio initial medium/ extraction solvent; by having a flow meter (FM₇) at the outlet of first heat exchanger (P₁) allow the control of the flow of the extraction solvent containing the solute by adjusting the rotation speed of the pump (B₅); because of the falling film evaporator (E) is equipped with the pressure sensor (PE) that, adjusting the speed of the vacuum pump (Bv) allow the control of the pressure inside the falling film evaporator (E); because the falling film evaporator (E) is equipped with temperature sensors (T_{E} and T₃); because the falling film evaporator (E) is equipped with temperature sensors (T₁ and T₂) which measures the temperature of the heat fluid at the inlet and at the outlet; and because the temperature inside the falling film evaporator (E) being controlled by adjusting the rotation speed of the vacuum pump (Bv) considering the difference in the temperatures registered by (T₁ and T₂).
